# EUROPEAN PATENT APPLICATION

(11) **EP 1 168 169 A2**
(43) Date of publication of application: **02.01.2002**
(21) Application number: 01305461.4
(22) Date of filing: 22.06.2001
(51) Int. Cl.: G06F 9/46

(54) **Systems and methods for providing normalized data to a generic frequent shopper application from an external frequent shopper system**

(30) Priority: 27.06.2000 US 214672 P; 18.07.2000 US 618325
(71) Applicant: NCR INTERNATIONAL INC., Dayton, Ohio 45479 (US)
(72) Inventor: Doss, Gary Lamar, Lawrenceville, Georgia 30044 (US)
(74) Representative: Williamson, Brian

(57) **Abstract**

A data access layer is described that provides an interface between an external frequent shopper system and a generic frequent shopper application. The data access layer includes a frequent shopper access object that provides a set of method interfaces that are customized to the external frequent shopper system. The customized method interfaces provide instructions to the external frequent shopper system to perform frequent shopper program operations requested by the generic frequent shopper application. The data access layer further includes a data object accessible by the generic frequent shopper application for locally storing data retrieved from the external frequent shopper system by the frequent shopper access object in a normalized format.

## Description

The present invention relates generally to computerized retail systems, and more particularly to advantageous aspects of systems and methods for providing normalized data to a generic frequent shopper application from a host external frequent shopper system.

In today's highly competitive retail environment, it has become increasingly important to provide incentives for frequent shoppers, in order to reward customer loyalty and to encourage repeat business. In a typical frequent shopper program, customers open a frequent shopper account and earn frequent shopper points through purchases made at the store. As a customer accrues frequent shopper points, the customer becomes eligible for various rewards and discounts. In order to receive a reward or discount, the customer redeems points in the customer's frequent shopper account. These points are then deducted from the account.

The frequent shopper program may also be used to target marketing information to specific customers. For example, certain customers in a grocery store may, through their participation in the store's frequent shopper program, indicate an interest in fresh produce. Thus, when the store is conducting a sale or other promotional activity in connection with fresh produce, that information can be targeted specifically to those customers.

New hardware and software products are being developed for use in the retail environment. Although certain of these products are self-contained, other products are designed to work in conjunction with already existing systems in a retail store. For example, some generic frequent shopper applications provides, among other things, a network of interactive kiosks that provides customer access to a retail store's already existing frequent shopper system.

One difficulty that has arisen in developing a generic frequent shopper application is that currently existing frequent shopper systems are not standardized. Thus, the format of frequent shopper account data stored in these systems' databases varies from system to system, as there is no normalized or standard format for accessing data from these systems. Each system has its own programmatic interfaces for accessing the frequent shopper data. Applications specifically written to work with these interfaces will only work with the targeted marketing/frequent shopper system for which they were written.

It is of course desirable from the viewpoint of the developer of a frequent shopper application for the application to be generic, that is, able to operate with any targeted marketing/frequent shopper system. There is thus a need for systems and techniques for providing a normalized format for accessing data from an external frequent shopper system and for performing general operations available from these already existing systems.

The above-described issues and others are addressed by the present invention, one aspect of which is directed to a data access layer that provides an interface between an external frequent shopper system and a generic frequent shopper application. The data access layer includes a frequent shopper access object that includes a set of method interfaces that are customized to the external frequent shopper system. The customized method interfaces provide instructions to the external frequent shopper system to perform frequent shopper program operations requested by the generic frequent shopper application. The data access layer further includes a data object accessible by the generic frequent shopper application for locally storing, in a normalized format, data retrieved from the external frequent shopper system by the frequent shopper access object.

According to a first aspect of the present invention there is provided a data access layer for providing an interface between an external frequent shopper system and a generic frequent shopper application, comprising:
a frequent shopper access object providing a set of method interfaces customized to the external frequent shopper system, the method interfaces providing instructions to the external frequent shopper system to perform frequent shopper program operations requested by the generic frequent shopper application; and
a data object accessible by the generic frequent shopper application for locally storing, in memory, data retrieved from the external frequent shopper system by the frequent shopper access object in a normalized format.

According to a second aspect of the present invention there is provided a method of providing an interface between an external frequent shopper system and a generic frequent shopper application, comprising:
(a) constructing a template of method interfaces for receiving requests from the generic frequent shopper application for operations to be performed by the external frequent shopper system;
(b) customizing the method interfaces to the external frequent shopper system to perform the requested operations; and
(c) defining data fields in a data object accessible by the generic frequent shopper application for storing data retrieved from the external frequent shopper system by the method interfaces in a normalized format.

An embodiment of the present invention will now be described, by way of example, with reference to the accompanying drawings, in which:
Fig. 1 shows a diagram of a frequent shopper system in accordance with a first embodiment of the present invention;
Fig. 2 shows a diagram of the frequent shopper system shown in Fig. 1, illustrating the data access layer in greater detail;
Fig. 3 shows a table listing the method interfaces provided by the frequent shopper access object shown in Fig. 2;
Fig. 4 shows a table listing the data fields contained in the member data object shown in Fig. 2;
Fig. 5 shows a table listing the data fields contained in the personal data object shown in Fig. 2;

One aspect of the present invention addresses the above-described issues, and others, by providing a generic frequent shopper application with a normalized, standard interface to information contained in an external target marketing/frequent shopper system. The normalized interface provides for consistent access to the targeted marketing data, as well as a set of well-defined interfaces for performing some of the general operations available from the external target marketing/frequent shopper system. Consistent data access allows the targeted marketing data to be accessed by the generic frequent shopper application in the same manner, regardless of which targeted marketing/frequent shopper system provides the data. According to a further aspect of the invention, the targeted marketing data is broken down into two distinct categories, member data and personal data. Member data identifies the frequent shopper program account information for a specific member. Personal data identifies the member by name, address, telephone number, and the like.

Well-defined operation interfaces allow the generic frequent shopper application to request certain general operations to be performed in the external targeted marketing/frequent shopper system without having to know specific operational details of the external system. These general operations include, for example, account lookup, personal identification number (PIN) validation, point redemption, point credits, account maintenance, and account creation. Thus, a normalized, standard interface provides a data access service that makes it possible to create generic frequent shopper applications that will operate regardless of which external targeted marketing/frequent shopper system is utilized.

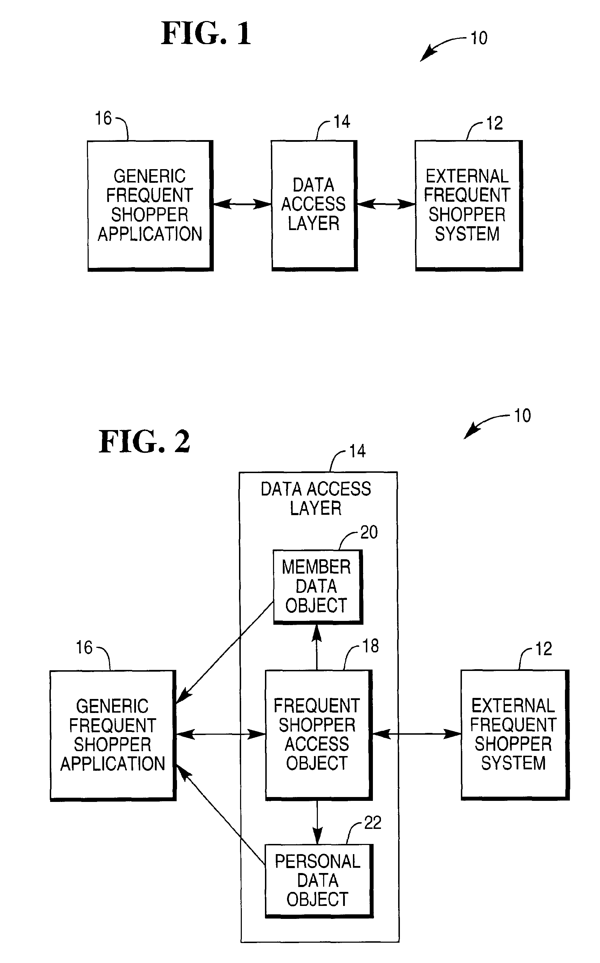

Fig. 1 shows a diagram illustrating a first embodiment of a system 10 in accordance with a first aspect of the present invention. As shown in Fig. 1, the system 10 includes an external frequent shopper system 12, a data access layer 14, and a generic frequent shopper application 16. The external frequent shopper system 12 is a retail store's already existing system. It includes a database containing frequent shopper account information and further includes a set of operations that are requested, as needed, by the generic frequent shopper application 16. It should be noted that although, for the purposes of the present discussion, it is assumed that the external system 12 already exists at the retail store, it would also be possible to practice the present invention with an external system 12 that is installed at the same time as, or even subsequent to, the installation of the generic application 16.

In a presently preferred embodiment of the invention, the generic frequent shopper application 16 is a product that has been developed to be used in conjunction with an external frequent shopper system. That patent application is directed to, among other things, presentation and business services that provide retail customers with direct, interactive access to an external frequent shopper system through a network of retail kiosks in order to perform frequent shopper program functions and to receive targeted marketing information. It will be appreciated that the present invention, as described below, may be readily adapted to provide normalized data to other generic applications.

In accordance with the present invention, the generic frequent shopper application 16 is developed independently of any specific external system 12, based upon assumptions about features common to typical external systems. This design approach is highly advantageous because external frequent shopper systems vary widely from retailer to retailer. The present invention allows a single, sophisticated generic frequent shopper application to be created for use with virtually all of these different external systems.

In accordance with the present invention, a data access layer 14 provides an interface between the generic frequent shopper application 16 and the external frequent shopper system 12, and serves to isolate them from each other. As described in further detail below, the data access layer 14 accesses data in the external frequent shopper system 12 in a normalized format. The data access layer 14 further includes operational interfaces that allow the generic frequent shopper application 16 to request the external system 12 to perform certain general operations.

In a first embodiment of the invention, the data access layer 14 is implemented as a set of component object model (COM) objects that are created using object-oriented programming techniques. Fig. 2 shows a diagram of the system 10 shown in Fig. 1, in which the data access layer 14 has been expanded to illustrate the COM objects used. These include a frequent shopper access object 18, a member data object 20, and a personal data object 22. The frequent shopper access object 18 provides access to the general operations of the external frequent shopper system 12. The member and personal data objects 20 and 22 provide a normalized storage location for the data from the external frequent shopper system 12. The member and personal data objects 20 and 22 are accessible by the generic frequent shopper application.

The frequent shopper access object 18 provides a template that defines a set of operational method interfaces that are customized to the programmatic interfaces of the external system 12 as part of the process of installing the generic application 16. The template is designed based upon assumptions as to common features of external frequent shopper systems and upon the requirements of the generic frequent shopper application 16. Each operational method interface includes a customized set of instructions to the external system to perform certain defined operations, described below.

Thus, when the generic frequent shopper application 16 requires certain operations to be performed by the external system 12, the generic application 16 invokes the frequent shopper access object 18, thereby invoking the appropriate method interfaces, which have been customized to send the appropriate set of instructions to the external system 12 to perform the requested operations. Because the customized method interfaces in the frequent shopper access object 18 are built upon a standard template of operations required by the generic frequent shopper application 16, the generic application can be designed independently from the external system 12.

Any member or personal data to be communicated to the generic application 16 from the external system 12 is normalized through the use of the member and personal data objects 20 and 22. The template definitions for the frequent shopper access object 18 include definitions for data retrieved from the external system 12 by the defined method interfaces. The retrieved data is stored locally in assigned data fields in the member and personal data objects 20 and 22 for use by the generic frequent shopper application 16. The customized method interfaces in the frequent shopper access object 18 are designed to properly match each individual piece of data retrieved from the external system 12 with the appropriate data field in the member and personal data objects 20 and 22. In addition, as described below, the member and personal data objects 20 and 22 are each provided with extended data fields to hold pieces of data retrieved from the external system 12 beyond the data specifically provided for by the other data fields.

Thus, the present invention allows the generic frequent shopper application 16 to be provided with a standard set of operations. When the generic application 16 requires an operation to be performed by the external system 12, such as accessing or updating data contained in the external system 12, the generic application 16 makes a standard request through the frequent shopper access object 18. The frequent shopper access object 18 then invokes the appropriate customized method interfaces, which then send the appropriate commands to the external system 12 and receive data outputs from the external system 12. The retrieved data is then locally stored in a standard format in assigned data fields in the member and personal data objects 20 and 22. The generic application 16 then retrieves the data, in a normalized format, from the member and personal data objects 20 and 22.

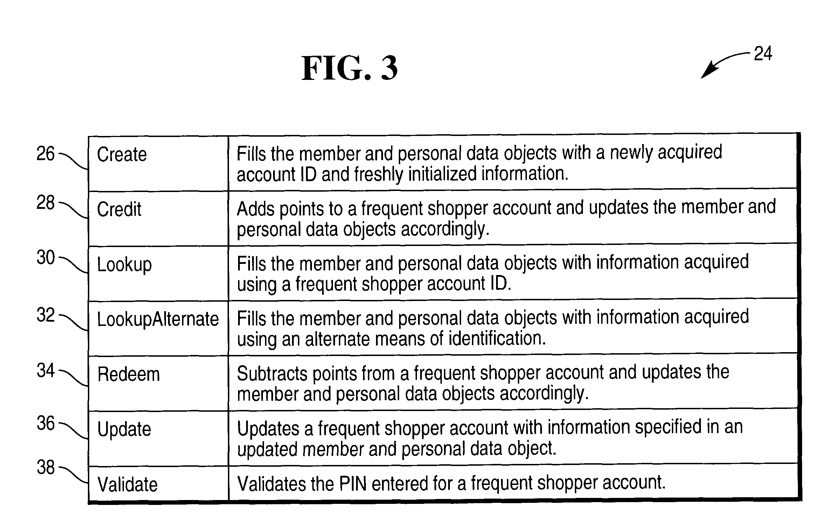

Fig. 3 shows a table 24 that lists a defined set of method interfaces 26 through 38 that, as part of the installation process, are customized to the external frequent shopper system 12 to instruct the external system 12 to perform operations requested by the generic frequent shopper application 16. The set of method interfaces was constructed based upon features common to typical external frequent shopper systems, as well as upon the requirements of the generic application 16. As shown in Fig. 3, these method interfaces include Create 26, Credit 28, Lookup 30, LookupAlternate 32, Redeem 34, Update 36, and Validate 38.

The Create method interface 26 is used when a request is made at the generic frequent shopper application 16 to open a new frequent shopper account. This interface 26 provides to the external system 12 the appropriate instructions required to open the new account in the external system 12 and then fills the member and personal data objects 20 and 22 with a newly acquired account identification number and freshly initialized information. The generic application 16 then accesses the new account information from the member and personal data objects 20 and 22. The generic application 16 may use this data in a number of ways. It may, for example, display the new account data to a customer or use the data to print a temporary identification card.

The Credit method interface 28 is used when a request is made by the generic application 16 to add points to a frequent shopper account. In a typical external frequent shopper system 12, points are added to a frequent shopper account in various ways. One common way is for points to be added at a point-of-sale (POS) terminal, when the customer has made a suitable purchase. However, it may also be desirable for points to be added by the generic frequent shopper application 16. For example, the retailer may choose to run an incentive program in which points are added to a customer's frequent shopper account to reward customer actions other than purchases. This could include bonus points for referring new members, or other events for which the retailer wishes to provide an incentive. The Credit method interface 28 updates the member and personal data objects 20 and 22 accordingly.

The Lookup method interface 30 is used when a request is made by the generic frequent shopper application 16 for information relating to a customer's frequent shopper account. For example, a customer may be provided with a frequent shopper card that can be swiped or read at a kiosk that is part of the generic application 16 to identify the customer. The customer may then use the kiosk to look up information in their account. The information retrieved by the Lookup method interface 30 is stored in the member and personal data objects 20 and 22 for use by the generic frequent shopper application 16.

Similar to the Lookup method interface 30, the LookupAlternate method interface 32 is used when a request is made by the generic frequent shopper application 16 for information relating to a customer's frequent shopper account. The LookupAlternate method interface 32 is used when the customer provides a means of identification other than a frequent shopper program card. This would be the case, for example, when the customer has neglected to bring the card to the store. A separate LookupAlternate method interface 32 is provided because different external systems 12 may have different forms of acceptable alternate identification.

The Redeem method interface 34 is used when the generic frequent shopper application 16 makes a request to the external frequent shopper system 12 to subtract points from a customer's frequent shopper account. This request would be made when the customer elects to redeem points in an account in exchange for a discount or reward. In typical external systems 12, the redemption function is performed at a POS terminal when the customer makes a purchase. However, it may be desirable for the redemption function to be performed at a retail kiosk that is part of the generic application 16. The member and personal data objects 20 and 22 are updated accordingly.

The Update method interface 36 is used when the generic frequent shopper application 16 makes a request to the external frequent shopper system 12 to update a frequent shopper account. According to a further aspect of the invention, the information used for the update is specified in an updated member and personal data object. The updated information may include a change of address, or the like.

Finally, the Validate method interface 38 is used when the generic frequent shopper application 16 makes a request to the external frequent shopper system 12 to validate a customer's personal identification number (PIN). The PIN is provided to the customer in addition to the frequent shopper card as a security measure, to prevent unauthorized use of the card to gain access to the customer's frequent shopper account through the generic frequent shopper application 16. Thus, PINs supported by the external system 12 are also supported by the generic application 16.

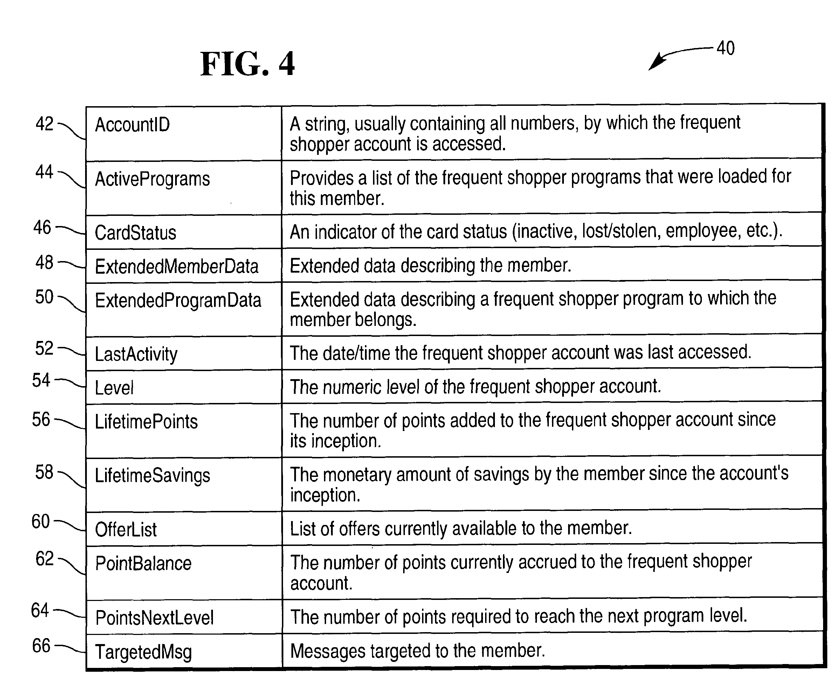

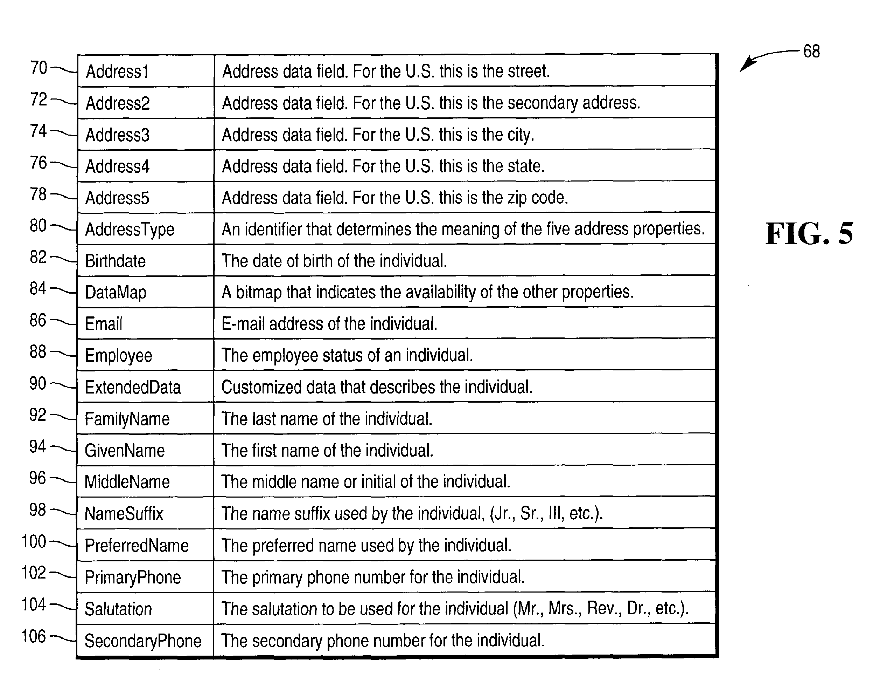

As described above, when one of the method interfaces 26 through 38 in the frequent shopper access object 18 retrieves data from the external frequent shopper system 12, it stores the data in assigned data fields in the member and personal data objects 20 and 22. Figs. 4 and 5 show tables 40 and 68 listing the data fields for the two data objects. As part of the customization of the frequent shopper access object 18, the method interfaces 26 through 38 are constructed such that data retrieved from the external system 12 by a method interface is assigned to the correct data fields in the member and personal data objects 20 and 22. Each data object is provided with extended data fields to hold data from the external system 12 beyond that specifically provided for in the other data fields.

The member data object 20 includes data fields that are specific to the frequent shopper program. The personal data object 22 includes general data fields, such as the customer's name and address. The reason that two separate data objects are used is to facilitate the use of data accessed by the frequent shopper access object 18 to be used by other applications, such as a gift registry application, that do not require data specific to the frequent shopper program. That other application would be able to access only the personal data object 22.

Fig. 4 shows a table 40 listing the data fields 42 through 66 of the member data object 20:

The AccountID data field 42 is a string, usually containing all numbers, by which the frequent shopper account is accessed.

The ActivePrograms data field 44 provides a list of the frequent shopper programs that were loaded by the external system 12 for the customer. This field would be used where the retail store conducts multiple frequent shopper programs.

The Card Status data field 46 provides an indicator of the status of the member's frequent shopper card. This status includes active inactive, lost/stolen, employee, or other indicators of the card's status, as desired.

The ExtendedMemberData field 48 provides extended data describing the member, and the ExtendedProgramData field 50 provides extended data describing a frequent shopper program to which the member belongs. These two fields 48 and 50 allow the member data object 20 to contain member information beyond the information specifically provided for by the other data fields.

The LastActivity field 52 provides the date and time the frequent shopper account was last accessed.

The Level field 54 provides the numeric level of the frequent shopper account. This field is used where the retailer has defined multiple levels within a frequent shopper program.

The LifetimePoints field 56 is the number of points added to the frequent shopper account since its inception. Even where a customer has redeemed some or all of the points in their frequent shopper account, the customer may nonetheless be eligible for a reward based upon the customer's lifetime point total.

The LifetimeSavings field 58 is the monetary amount of savings by the member since the account's inception. This information is useful for demonstrating to the customer the value of his or her participation in the frequent shopper program and may encourage further purchases at the store in the future.

The OfferList field 60 is a list of frequent shopper program offers that are currently available to the member. This list may, for example, be printed out by the generic frequent shopper application 16 for use by the customer.

The PointBalance field 62 is the number of points that are currently in the frequent shopper account.

The PointsNextLevel field 64 is the number of points required by the customer to reach the next program level.

Finally, the TargetedMsg field 64 contains messages that are targeted to the specific customer whose account is currently being processed. These messages are accessible by the generic frequent shopper application 16 for display to the customer.

Fig. 5 shows a table 68 listing the data fields 70 through 106 of the personal data object:

Fields 70 through 78 provide five data fields for the customer's address, which for an address in the United States includes the number and street, secondary address information, city, state, and zip code.

The AddressType field 80 is an identifier that determines the meaning of the five address properties.

The Birthdate field 82 provides the customer's date of birth.

The DataMap field 84 is a bitmap that indicates the availability of other properties.

The Email field 86 provides the customer's e-mail address.

The Employee field 88 shows the employee status of an individual. This is significant because employees are typically eligible for discounts other than those offered to customers who are not employees.

The ExtendedData field 90 provides customized data that describes the individual. This field 90 allows the personal data object 22 to contain information beyond that specifically provided for by the other data fields.

Fields 92 through 100 provide detailed name information, including the family name, given name, middle name, name suffix, and the preferred name of the customer. The PrimaryPhone field 102 provides the primary telephone number of the individual.

The Salutation field 104 provides the correct salutation to be used in identifying the customer.

Finally, the SecondaryPhone field 106 provides a secondary telephone number for the customer.

It will be appreciated that the choice of method interfaces in the frequent shopper access object 18 and the data fields in the member and personal data objects 20 and 22 may be modified without departing from the spirit of the present invention.

While the foregoing description includes details which will enable those skilled in the art to practice the invention, it should be recognized that the description is illustrative in nature and that many modifications and variations thereof will be apparent to those skilled in the art.

## Claims

1. A data access layer for providing an interface between an external frequent shopper system and a generic frequent shopper application, comprising:
a frequent shopper access object providing a set of method interfaces customized to the external frequent shopper system, the method interfaces providing instructions to the external frequent shopper system to perform frequent shopper program operations requested by the generic frequent shopper application; and
a data object accessible by the generic frequent shopper application for locally storing, in memory, data retrieved from the external frequent shopper system by the frequent shopper access object in a normalized format.

2. A data access layer as claimed in claim 1, wherein the data object includes defined data fields and wherein the method interfaces store data retrieved from the external frequent shopper system in assigned data fields.

3. A data access layer as claimed in claim 2, wherein the data object includes an extended data field for storing data retrieved from the external frequent shopper system for which there is no defined data field.

4. A data access layer as claimed in any preceding claim including a member data object for locally storing data specific to a frequent shopper program and a personal data object for locally storing general customer identification information, the member and personal data objects being accessible by the generic frequent shopper application.

5. A data access layer as claimed in any preceding claim, wherein the frequent shopper access object and the data object are implemented as COM objects.

6. A data access layer as claimed in any preceding claim, wherein the set of method interfaces is constructed from a template based upon features common to external frequent shopper systems.

7. A data access layer as claimed in claim 6, wherein the set of method interfaces includes method interfaces for the following operations to be performed by the external frequent shopper system:
creating a frequent shopper account;
crediting a frequent shopper account with frequent shopper points;
looking up frequent shopper account information;
redeeming points in a frequent shopper account; and
updating information in a frequent shopper account.

8. A data access layer as claimed in claim 7, wherein the set of method interfaces further includes a method interface for validating a personal identification number entered for a frequent shopper account.

9. A method of providing an interface between an external frequent shopper system and a generic frequent shopper application, comprising:
(a) constructing a template of method interfaces for receiving requests from the generic frequent shopper application for operations to be performed by the external frequent shopper system;
(b) customizing the method interfaces to the external frequent shopper system to perform the requested operations; and
(c) defining data fields in a data object accessible by the generic frequent shopper application for storing data retrieved from the external frequent shopper system by the method interfaces in a normalized format.

10. A method as claimed in claim 9, wherein step (c) includes providing an extended data field for storing data retrieved from the external frequent shopper system for which there is no defined data field.

11. A method as claimed in claim 9, wherein step (c) includes defining data fields in a member data object for locally storing data specific to a frequent shopper program and defining data fields in a personal data object for locally storing general customer identification information, the member and personal data objects being accessible by the generic frequent shopper application.

12. A method as claimed in claim 9, wherein in step (a) the template of method interfaces is constructed based upon features common to external frequent shopper systems.

13. A method as claimed in claim 12, wherein the template of method interfaces includes method interfaces for the following operations to be performed by the external frequent shopper system:
creating a frequent shopper account;
crediting a frequent shopper account with frequent shopper points;
looking up frequent shopper account information;
redeeming points in a frequent shopper account; and
updating information in a frequent shopper account.

14. A method as claimed in claim 13, wherein the template of method interfaces further includes a method interface for validating a personal identification number entered for a frequent shopper account.
